Europäisches Patentamt

European Patent Office

Office européen des brevets

(11) Numéro de publication: **0 107 543**
**B1**

(12) **FASCICULE DE BREVET EUROPEEN**

(45) Date de publication du fascicule du brevet: 03.06.87

(51) Int. Cl.⁴: **B 64 C 27/82**

(21) Numéro de dépôt: **83401878.0**

(22) Date de dépôt: **26.09.83**

(54) **Agencement de rotor de queue de poussée accrue pour aéronef à voilure tournante.**

(30) Priorité: **06.10.82 FR 8216753**

(43) Date de publication de la demande:
**02.05.84 Bulletin 84/18**

(45) Mention de la délivrance du brevet:
**03.06.87 Bulletin 87/23**

(84) Etats contractants désignés:
**DE GB IT**

(56) Documents cités:
**FR-A-1 017 974**
**FR-A-2 167 249**
**US-A-2 473 329**

(73) Titulaire: **AEROSPATIALE Société Nationale Industrielle**
**37 boulevard de Montmorency**
**F-75781 Paris Cédex 16 (FR)**

(72) Inventeur: **Vuillet, Alain**
**Le Fleming No.2 Avenue Fleming**
**F-13090 Aix-en-Provence (FR)**
Inventeur: **Morelli, Françoise Jeanne**
**Avenue Paul Cézanne**
**F-13100 Aix-en-Provence (FR)**

(74) Mandataire: **Bonnetat, Christian et al**
**Cabinet PROPI Conseils 23 rue de Léningrad**
**F-75008 Paris (FR)**

## Description

La présente invention concerne un agencement de rotor de queue à poussée accrue pour aéronef à voilure tournant et un dispositif pour accroître la poussée d'un tel agencement de rotor.

On sait que, pour équilibrer en permanence le couple de réaction résultant de la rotation de la voilure tournante, ainsi que pour contrôler l'aéronef sur son axe de lacet, notamment lors des évolutions en translation latérale à basse vitesse, on prévoit un rotor auxiliaire disposé au voisinage de l'extrémité de la queue de l'aéronef et exerçant une poussée traversale, qui est adaptée à toutes les conditions de vol. Ce rotor auxiliaire de queue exerce donc sur l'aéronef un couple d'équilibre, de sens opposé au couple de réaction du rotor principal, c'est-à-dire en fait de même sens que le couple d'entrainement de la voilure tournante.

Pour ajuster ce couple d'équilibre à la plage de valeurs nécessaires pour assurer l'équilibre et/ou le contrôle recherché de l'aéronef, il est possible d'agir sur la distance séparant le rotor auxiliaire de l'axe de la voilure tournante et/ou sur la poussée dudit rotor auxiliaire.

En règle générale, on dispose le rotor auxiliaire de queue le plus près possible de ladite voilure tournante, du fait qu'il est nécessaire de limiter l'encombrement hors tout de la partie arrière de l'hélicoptère.

De plus, un grand bras de levier conduit à une importante augmentation de la masse et la structure, et ne permet pas une gestion optimale de la puissance disponible.

Dans ces conditions, on agit plus volontiers sur la poussée fournie par le rotor auxiliaire de queue, et, généralement, on cherche à obtenir de ce rotor auxiliaire une poussée maximale suffisamment élevée pour satisfaire les conditions de vol les plus exigeantes et on prévoit des moyens de réglage permettant de ne prélever que la partie de cette poussée maximale adaptée aux autres conditions de vol.

Pour obtenir du rotor auxiliaire une poussée maximale élévée, on peut penser tout d'abord à dériver de la transmission à voilure tournante une puissance importante pour entraîner ledit rotor auxiliaire. Outre le fait qu'une telle solution peut nécessiter une augmentation de la puissance dudit moteur, elle nécessite obligatoirement la réalisation d'une transmission suffisamment résistante et donc de masse élevée. Dans le cas d'un rotor auxiliaire déjà existant dont on voudrait augmenter la poussée par ce moyen, il serait nécessaire de modifier la transmission pour en augmenter la résistance mécanique ce qui augmenterait la masse de l'ensemble propulsif arrière et risquerait de plus la génération de bruits élevés par les pales dudit rotor auxiliaire.

Pour augmenter la poussée maximale d'un rotor auxiliaire de queue, on peut également tenter d'augmenter l'angle de pas des pales dudit rotor. Cependant, ceci, d'une part, nécessite un apport supplémentaire de puissance avec les inconvénients concomitants mentionnés ci-dessus et, d'autre part, limite la plage d'utilisation des profils des pales, c'est-à-dire la possibilité de manoeuvre, puisque l'on se rapproche alors de l'angle de pas maximal admissible. De plus, l'apparition du phénomème de décollement de l'écoulement de l'air sur les pales apparaît trés rapidement, de sorte que l'action du rotor auxiliaire risque d'être amoindrie et même annulée.

Dans le brevet US—A—2 473 329, on prévoit un système de rotor de queue pour hélicoptère à rendement élevé du fait que ce rotor se trouve à l'intérieur d'un tunnel comportant une entrée d'air cylindrique et une sortie d'air divergente. Dans ce système, le pas des pales du rotor est fixe, mais on commande l'entrée d'air à l'intérieur dudit tunnel (et donc la poussée) grâce à des volets rotatifs, disposés dans ladite partie d'entrée cylindrique, en amont du rotor.

De même, dans le brevet GB—A—572 417, on décrit un système de rotor de queue pour hélicoptère comportant un rotor disposé dans un tunnel et pourvu de volets en amont dudit rotor. De plus, la sortie d'air est constituée d'une jupe réglable. Dans ce système, le contrôle de la poussée exercée par le rotor se fait par l'intermédiaire de la jupe reglable et, soit par le pas des pales du rotor, lesdits volets étant fixes, soit par le pas des volets, le pas des pales du rotor étant alors fixe. On prévoit même une commande de l'orientation de l'axe dudit rotor auxiliaire.

La présente invention a pour but d'obtenir le maximum de poussée d'un rotor de queue d'aéronef à voilure tournante, ainsi que d'augmenter la poussée d'un tel rotor déjà existant, sans augmenter la puissance qui lui est fournie et tout en remédiant aux inconvénients mentionnés ci-dessus. Elle s'adresse tout particulièrement à un rotor de queue caréné, c'est-à-dire comportant un tunnel à l'intérieur duquel est disposé ledit rotor.

Par rapport au document US—A—2473 329 qui décrit déjà un agencement de rotor de queue pour aéronef à voilure tournante, comportant un tunnel d'axe transversal audit aéronef dans lequel est disposé un rotor à pales multiples coaxial audit tunnel et engendrant un écoulement d'air transversal, ainsi qu'une pluralité d'aubes agencées de façon au moins sensiblement radiale par rapport audit tunnel, l'invention est caractérisée en ce que lesdites aubes sont fixes et disposées en aval dudit rotor par rapport audit écoulement d'air pour pouvoir récupérer sous forme de poussée axiale l'énergie de rotation de l'écoulement d'air à la sortie du rotor et en ce que la distance $d$ séparant le bord de fuite des pales rotatives du bord d'attaque des aubes fixes est au moins égale à une fois la longueur de la corde du profil desdites pales rotatives.

Ainsi, à puissance égale fournie au rotor, on peut accroître la poussée totale fournie par celui-ci.

On remarquera aisément que les buts et les moyens de la présente invention d'une part, et des brevets US—A—2 472 320 et GB—A—572 417 d'autre part, sont entièrement différents, quoique concernant tous des rotors carénés. En effet, le but des dispositifs décrits dans les deux brevets antérieurs est d'ajuster, dand le sens de la diminution, la valeur de la poussée transversale à partir d'une valeur maximale de poussée définie une fois pour toutes par la combinaison d'un rotor et d'un tunnel, les moyens pour ce faire étant constitués de volets d'obturation, mobiles ou fixes, disposés dans le tunnel en amont du rotor, et éventuellement d'une jupe mobile formant tuyère de sortie. En revanche, le but de la présente invention est d'accroître la poussée maximale d'un agencement de rotor présentant une structure de tunnel et de rotor définie, sans augmenter la puissance fournie, et pour cela on récupère l'énergie de rotation de l'écoulement d'air à la sortie du tunnel, en redressant ce courant d'air au moyen d'aubes radiales fixes disposées en aval dudit rotor.

Dans le cas où, de façon usuelle, le rotor tourne par rapport à un moyeu fixe, disposé disposé coaxialement au tunnel et à l'intérieur duquel les organes de commande et de transmissions sont disposés, il est avantageux que lesdites aubes fixes soient disposées entre ledit moyeu et ledit tunnel, de façon à participer au moins partiellement à la liaison mécanique entre ceux-ci. Les aubes fixes peuvent alors soit assurer seules la fixation du moyeu fixe et du rotor dans le tunnel, soit coopérer avec des bras de support spécialement prévus pour maintenir ledit moyeu et le rotor. Dans les deux cas, la présence desdites aubes entre le moyeu fixe et le tunnel confère à celui-ci une grande rigidité, de sorte que l'on peut réduire au maximum le jeu entre les extrémités des pales du rotor et la paroi du tunnel et donc améliorer les performances aérodynamiques d'ensemble du rotor. Ainsi, lesdites aubes permettent non seulement de récupérer sous forme de poussée une plus grande part de l'énergie fournir par le rotor, mais encore d'améliorer le rendement global du rotor anti-couple.

Dans le cas où l'agencement de rotor comporte, en plus des aubes fixes, de tels bras de support du moyeu, on peut disposer lesdites aubes fixes soit dans les espaces entre lesdits bras de support radiaux, soit en amont desdits bras de support.

Dans la première de ces réalisations, il est avantageux que les bras de support radiaux présentent le même profil que les aubes fixes afin de renforcer l'action de redressement de l'écoulement d'air exercée par celles-ci.

Dans la seconde de ces réalisations, on remarquera que la pluralité des aubes fixes entraînant une diminution des vitesses tangentielles de l'écoulement d'air, la traînée desdits bras de support radiaux est alors abaissée, ce qui améliore le rendement propulsif de l'agencement de rotor et est particulièrement avantageux lorsque les écoulements d'air sont décollés desdits bras de support lors d'une incidence trop forte au cours de manoeuvres ou durant une rafale de vent.

Avantageusement, toutes les aubes fixes sont solidaires les unes des autres pour former un ensemble monolithique susceptible d'être monté d'une seule pièce dans le tunnel. Cet ensemble monolithique peut être prévu pour s'adapter par simple emboîtement de côté de la sortie du tunnel.

Dans le cas usuel où l'agencement de rotor comporte un moyeu fixe coaxial au tunnel, il est avantageux que l'ensemble monolithique comporte une couronne extérieure et une couronne intérieure concentriques entre lesquelles sont radialement disposées lesdites aubes fixes, le diamètre externe de la couronne extérieure correspondant au diamètre intérieur de la partie de tunnel dans laquelle est disposé ledit ensemble et le diamètre interne de la couronne intérieure correspondant au diamètre extérieur de la partie de moyeu enserrée par ladite couronne intérieure.

Si l'ensemble des aubes fixes doit être disposé au niveau des bras de support du moyeu, les couronnes extérieure et intérieure comportent des évidements pour le passage desdits bras de support radiaux.

Les figures du dessin annexé feront bien comprendre comment l'invention peut être réalisée.

La figure 1 est une vue partielle de la partie arrière d'un hélicoptère pourvu d'un agencement de rotor conforme à l'invention.

La figure 2 est une coupe agrandie selon la ligne II—II de la figure 1, montrant en coupe axiale un exemple particulier de réalisation de l'agencement de rotor selon l'invention.

La figure 3 montre un ensemble d'aubes redresseuses selon l'invention pour l'agencement de rotor des figures 1 et 2.

Les figures 4 et 5 sont des diagrammes illustrant le fonctionnement de l'agencement de rotor selon l'invention.

La figure 6 illustre le résultat d'essais comparatifs entre deux agencements de rotor identiques, l'un d'eux seulement étant équipé des aubes redresseuses selon l'invention.

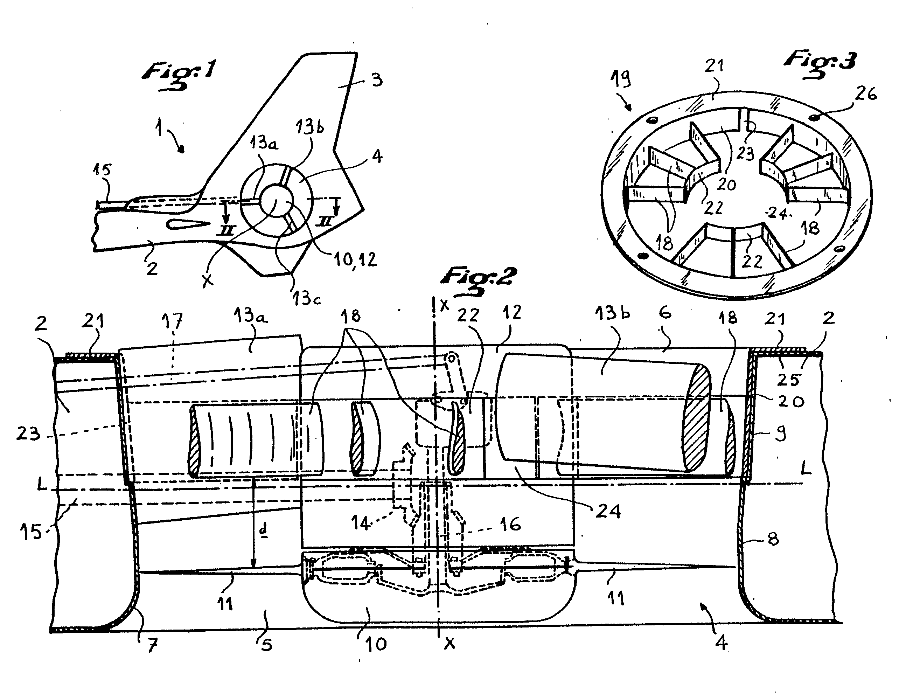

La queue 1 d'hélicoptère montrée par la figure 1 comporte une partie de fuselage 2 et une dérive verticale 3.

A la base de la dérive verticale 3 est agencé un tunnel 4 traversant la partie de fuselage 2 de part en part, de sorte que ce tunnel comporte une entrée d'air 5 d'un côté du fuselage et une sortie d'air 6 de l'autre côté dudit fuselage.

Le tunnel 4 présente une forme de révolution autour d'un axe X—X, transversal à l'axe longitudinal L—L de l'hélicoptère. Par exemple, l'entrée d'air 5 présente un bord périphérique arrondi 7 qui est prolongé, vers la sortie d'air 6, par une portion cylindrique 8 ellemême prolongée jusqu'à ladite sortie d'air 6 par un divergent 9.

Dans le tunnel 4 est monté un rotor 10 pourvu d'une pluralité de pales 11. Ce rotor 10 est porté par un moyeu fixe 12 solidaire de la structure de l'hélicoptère par l'intermédiaire de trois bras 13a, 13b et 13c. Le rotor 10 et le moyeu fixe 12 sont de forme cylindrique et sont centrés sur l'axe X—X du tunnel 4. Le rotor 10 est disposé du côté de l'entrée d'air 5, de façon par exemple que les extrémités des pales 11 se trouvent en regard de la portion cylindrique 8 du tunnel 4, tandis que le moyeu fixe 12 se trouve du côté de la sortie d'air 6.

De façon connue, à l'intérieur du moyeu 12 se trouve un mécanisme 14 d'entraînement en rotation du moyeu rotor 10, lui-même entraîné par un arbre 15, mû par le ou les moteurs principal (non représenté) de l'aéronef destiné à l'entraînement de la voilure tournante (également non représentée). Ainsi, comme expliqué ci-dessus, le rotor 10 crée l'écoulement d'air qui engendre la poussée transversale nécessaire à l'équilibre en lacet de l'hélicoptère.

De façon également connue, pour faire varier l'intensité de cette poussée transversale, on prévoit, à l'intérieur du moyeu 12, et partiellement du rotor, un système 16 de commande de l'angle de pas des pales 11, actionné par l'intermédiaire d'une bielle de commande 17.

Comme montré par la figure 2, l'un des bras (13a) de supporte du moyeu 12 sert de carénage à l'arbre 15 et à la bielle 17.

Les bras 13a, 13b et 13c peuvent être uniformément répartis à 120° autour de l'axe X—X et disposés avec un certain décalage relatif en arrière du plan des pales 11.

Conformément à l'invention, dans le tunnel 4 en aval des pales 11 du rotor, sont prévues une pluralité d'aubes fixes 18 destinées à récupérer l'énergie de rotation de l'écoulement d'air traversant le tunnel 4 sous l'action des pales 11 du rotor et disposé radialement par rapport audit tunnel.

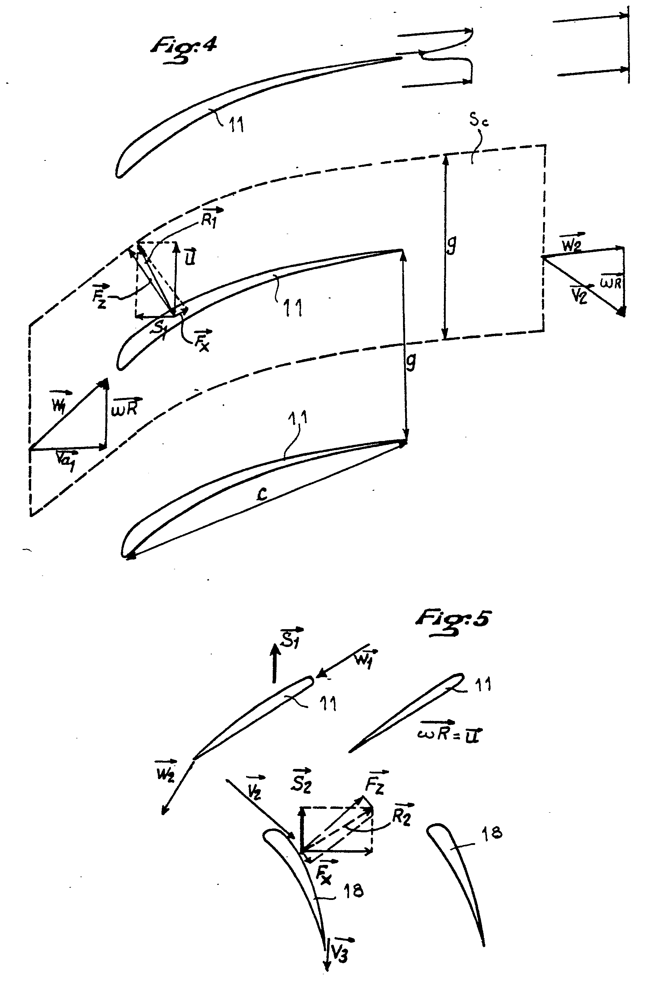

Dans l'exemple de réalisation représenté sur les figures 2 et 3, la pluralité des aubes 18 forment un ensemble solidaire 19 comportant une couronne extérieure 20, pourvue d'une bride 21, et une couronne intérieure 22, lesdites aubes 18 étant solidaires à leurs extrémités de la couronne extérieure 20 et de la couronne intérieure 22. Ces deux couronnes concentriques 20 et 22 comportent des encoches ou interruptions 23 ou 24 respectivement pour le passage des bras 13a, 13b et 13c.

Lorsque l'ensemble 19 est mis en place dans le tunnel 4, la couronne 22 s'applique sur le moyeu 12, la couronne 20 s'applique contre la paroi du divergent 9 et la bride 21 s'applique contre le bord externe 25 de la sortie d'air 6, auquel il est fixé grâce à des moyens de fixation (non représentés) traversant des trous 26 prévus dans la bride 21. Les trois bras 13a, 13b et 13c passent alors à travers les encoches ou interruptions 23 et 24. Afin que la couronne 20 ne fasse pas surépaisseur par rapport à la paroi du divergent 9, cette paroi comporte l'empreinte de ladite couronne, de sorte que, lorsque l'ensemble 19 est en place dans le tunnel 4, une partie du divergent 6 est formée par la couronne 20. De même, on pourrait prévoir l'empreinte de la couronne 22 dans le moyeu 12.

Puisque les bras de support 13a, 13b et 13c sont équirépartis autour de l'axe X, les aubes 18 de l'ensemble 19 forment trois groupes identiques séparés l'un de l'autre et destinés à venir chacun s'insérer dans l'espace entre deux desdits bras.

Bien entendu, la réalisation des figures 2 et 3 n'est donnée qu'à titre d'exemple et il va de soi que les aubes 18 pourraient être soit indépendantes les unes des autres, soit former un ensemble ou plusieurs ensembles de structure différente de celle de l'ensemble 19.

Toutefois, le mode de réalisation des figures 2 et 3 présente l'avantage d'une part, d'une grande simplicité de montage sur la tunnel 4, d'autre part, de pouvoir être adapté à des agencements de rotor, qui ont été fabriqués antérieurement à l'invention et dont on veut augmenter la poussée. Dans ce cas, comme il est difficile de former l'empreinte de la couronne 20 dans le divergent 6, il est avantageux de réaliser celle-ci avec une épaisseur aussi faible que possible. De plus, cet ensemble 19 à deux couronnes 20 et 22 concentriques reliées par des aubes radiale 18 présente une grande rigidité, de sorte qu'il contribue à rigidifier le tunnel 4, ce qui est favorable au rendement aérodynamique du rotor 10, puisque l'on peut alors réduire au maximum le jeu entre l'extrémité de ses pales 11 et la paroi de la portion de tunnel 8.

Notamment afin d'écarter tout risque de génération de bruit prohibitif, il est avantageux que les aubes fixes 18 soient situées en aval des pales mobiles 11 sans toutefois sentir du divergent. On a trouvé que lorsque la distance $d$ entre le bord de fuite des pales 11 (représentées à plat sur la figure 2, c'est-à-dire avec une incidence de 90°) et le bord d'attaque des aubes fixes 18 était au moins égal à une fois la longueur $c$ de la corde du profil des pales 11 il n'y avait aucun risque de bruit prohibitif.

De bons résultats ont été obtenus avec des aubes fixes 18 présentant, le long de leur envergure, un profil constant et un vrillage nul, ce qui facilite beaucoup la fabrication desdites aubes 18 et de l'ensemble 19.

Le profil des aubes 18 peut par exemple être du type NACA 65 A 10, éventuellement déformé autour de sa ligne moyenne. De préférence, l'incidence des aubes fixes 18 est de quelques degrés par rapport à l'axe X—X.

Bien entendu, quoique cela ne soit pas représenté sur la figure 2, les bras 13a, 13b et 13c pourraient être profilés de façon semblable aux aubes fixes 18 pour participer au redressement de l'écoulement d'air traversant le tunnel 4.

Les figures 4 et 5 explicitent le fonctionnement des aubes fixes 18 selon l'invention, en posant comme principe que, pour l'essentiel, les conditions aérodynamiques à la sortie de rotor 10 sont celles à l'entrée des aubes fixes 18.

Sur la figure 4, on a illustré l'action des pales rotatives 11 du rotor 10, en considérant ce qui se passe à l'intérieur d'une surface de contrôle Sc correspondant à un pas $g$.

Comme l'indique cette figure 4, la vitesse de rotation $u=\omega R$ du rotor, se combine avec la vitesse axiale d'entrée $Va_1$ de l'air pour donner une vitesse relave $W_1$ de l'écoulement de l'air au rotor, cette dernière vitesse établissant un champ de pression autour de la pale mobile 11 concernée.

Ce champ engendre alors une résultante aéro-

dynamique $R_1$ qui peut d'une part, se décomposer en un effort de portance $F_z$ et un effort de traînée $F_x$, d'autre part, donne lieu à une poussée axiale $S_1$ de direction orthogonale à la direction de la vitesse de rotation du rotor.

Suite au premier obstacle constitué par la pale 11 considérée, l'air sort du rotor 10 dans des conditions de vitesse différentes, et le triangle des vitesses de sortie permet de distinguer; une nouvelle vitesse relative $W_2$ au rotor inférieure à $W_1$, et une vitesse absolue $V_2$ qui attaque l'aube fixe 18 en correspondance.

La vitesse $V_2$, jouant pour l'aube fixe 18 le même rôle que la vitesse $W_1$ pour l'aube mobile 11, il est créé une poussée additionnelle $S_2$ (voir la figure 5).

Il est à noter que, dans la variante de réalisation mentionnée ci-dessus, dans laquelle les bras de support 13a, 13b et 13c du moyeu 12 sont disposés partiellement en aval des aubes fixes 18, les écoulements d'air ayant la vitesse de sortie $V_3$ des aubes 18, plus faible que la vitesse correspondante en sortie des pales 11 viennent avantageusement en contact tangentiel avec lesdits bras, ce qui permet une réduction de la traînée de ceux-ci et améliore donc le rendement propulsif de l'agencement de rotor.

On voit ainsi que, grâce à l'invention, en utilisant judicieusement l'espace disponible en aval du rotor 10 d'un agencement de rotor anti-couple caréné, il est possible de réaliser un ensemble propulsif compact, équilibré et rigide, procurant sans modification de la puissance fournie, une poussée accrue du rotor.

Des essais en soufflerie ont permis d'évaluer l'influence des aubes fixes sur les performances de l'agencement de rotor.

On a testé sur une maquette à échelle réduite, l'agencement de rotor de la figure 2 avec et sans l'ensemble 19 d'aubes fixes 18.

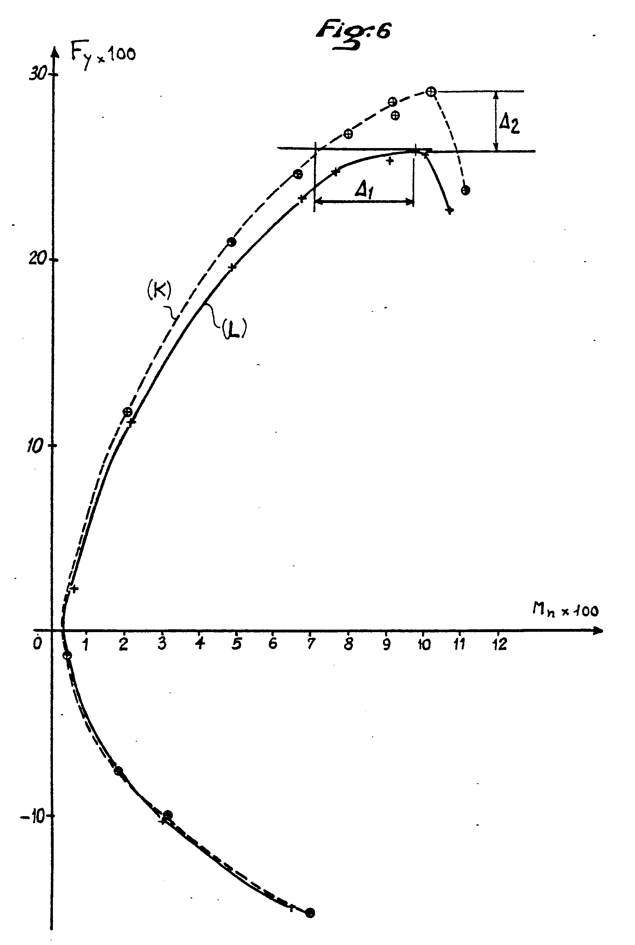

Sue la figure 6, dans un diagramme poussée réduite $F_y$ (en ordonnées)—puissance réduite $M_n$ (en abscisses), on a représenté la courbe (K) correspondant à la présence de l'ensemble (19) et la courbe (L) correspondant à l'absence dudit ensemble (19). On peut voir que la présente invention permet d'obtenir un gain $\Delta_1$ de 27% à iso-poussée au décrochage et un gain $\Delta_2$ de 13% à iso-puissance et iso-pas au décrochage.

Dans le diagramme de la figure 6, la poussée réduite $F_y$ et la puissance réduite $M_n$ ont respectivement pour expressions:

$$F_y = \frac{S}{1/2\rho \, AU^2} \quad \text{et} \quad M_n = \frac{W}{1/2\rho \, AU^3}$$

dans lesquelles S=poussée axiale; W=puissance; $\rho$=densité de l'air; A=surface du disque rotor; U=vitesse périphérique.

## Revendications

1. Agencement de rotor de queue pour aéronef à voilure tournante, comportant un tunnel (4) d'axe (X—X) transversal audit aéronef dans lequel est disposé un rotor (10) à pales multiples (11) coaxial audit tunnel (4) et engendrant un écoulement d'air transversal, ainsi qu'une pluralité d'aubes agencées de façon au moins sensiblement radiale par rapport audit tunnel, caractérisé en ce que lesdites aubes (18) sont fixes et disposées en aval dudit rotor (10) par rapport audit écoulement d'air pour pouvoir récupérer sous forme de poussée axiale l'énergie de rotation de l'écoulement d'air à la sortie du rotor (10) et en ce que la distance $d$ séparant le bord de fuite des pales rotatives (11) du bord d'attaque des aubes fixes (18) est au moins égale à une fois la longueur de la corde du profil desdites pales rotatives (11).

2. Agencement selon revendication 1, dans lequel ledit rotor tourne par rapport à un moyeu fixe (12) coaxial au tunnel (4), caractérisé en ce que lesdits aubes fixes (18) sont disposées entre ledit moyeu (12) ledit tunnel (4) de façon à participer au moins partiellement à la liaison mécanique entre ledit moyeu et ledit tunnel.

3. Agencement selon la revendication 2, dans lequel ledit moyeu fixe (12) est relié à la structure de l'aéronef par des bras de support radiaux (13a, 13b et 13c), caractérisé en ce que lesdites aubes fixes (18) sont disposées dans les espaces entre lesdits bras de support radiaux (13a, 13b et 13c).

4. Agencement selon la revendication 2, dans lequel ledit moyeu fixe (12) est relié à la structure de l'aéronef par des bras de support radiaux (13a, 13b et 13c), caractérisé en ce que lesdites aubes fixes (18) sont disposées en amont desdits bras de support.

5. Agencement selon la revendication 3, caractérisé en ce que les bras de support radiaux (13a, 13b et 13c) présentent le même profil que les aubes fixes (18) afin de renforcer l'action de celles-ci.

6. Agencement selon l'une quelconque des revendications 1 à 5, caractérisé en ce que lesdites aubes fixes (18) sont solidaires les unes des autres pour former un ensemble monolithique (19).

7. Agencement selon la revendication 6, caractérisé en ce que ledit ensemble monolithique (19) est prévu pour s'adapter par simple emboîtement du côté de la sortie (6) du tunnel (4).

8. Agencement selon les revendications 2 et 7, caractérisé en ce que ledit ensemble monolithique (19) comporte une couronne extérieure (20) et une couronne intérieure (22) concentrique entre lesquelles sont radialement disposées lesdites aubes fixes (18), le diamètre externe de la couronne extérieure (20) correspondant au diamètre intérieur de la partie (6) de tunnel (4) dans laquelle est disposé ledit ensemble et le diamètre interne de la couronne intérieure (22) correspondant au diamètre extérieur de la partie de moyeu (12) enserrée par ladite couronne intérieure (22).

9. Agencement selon la revendication 8, caractérisé en ce que les couronnes extérieure

0 107 543

(20) et intérieure (22) comportent des évidements (23, 24) pour le passage desdits bras de support radiaux (13a, 13b et 13c).

**Patentansprüche**

1. Heckrotoranordnung für Hubschrauber mit einem quer (X—X) zum Flugzeug verlaufenden Achsentunnel (4), in den ein mehrere Blätter (11) aufweisender Rotor (10) koaxial zum Tunnel (4) eingesetzt ist, wodurch eine transversale Luftströmung erzeugt wird, und mit mehreren Schaufeln, radial liegen, dadurch gekennzeichnet, daß die Schaufeln (18) ortsfest und—auf den Rotor (10) bezogen—stromabwärts angeordnet sind, um als Schub die Drehenergie der Lufströmung am Ausgang des Rotors (10) zurückzugewinnen, und daß der die Austrittskante der Drehblätter (11) von der Eintrittskante der festen Schaufeln (18) trennende Abstand d zumindest gleich der einfachen Länge des Profiles der Drehblätter (11) ist.

2. Heckrotoranordnung nach Anspruch 1 mit einem Rotor, der sich—bezogen auf die feste Nabe (12)—koaxial zum Tunnel (4) dreht, dadurch gekennzeichnet, daß die festen Schaufeln (18) zwischen der Nabe (12) und dem Tunnel (4) derart angeordnet liegen, daß sie zumindest teilweise an der mechanischen Verbindung zwischen Nabe und Tunnel teilhaben.

3. Anordnung nach Anspruch 2 mit durch radiale Stützarme (13a, 13b und 13c) mit dem Gefüge verbundener fester Nabe (12), dadurch gekennzeichnet, daß die festen Schaufeln (18) in den Räumen zwischen den radialen Stützarmen (13a, 13b und 13c) angeordnet sind.

4. Anordnung nach Anspruch 2 mit durch radiale Stützarme (13a, 13b und 13c) mit dem Gefüge verbundener fester Nabe (12), dadurch gekennzeichnet, daß die festen Schaufeln (18) vor den Stützarmen angeordnet sind.

5. Anordnung nach Anspruch 3, dadurch gekennzeichnet, daß die radialen Stützarme (13a, 13b und 13c) dasselbe Profil bieten wie die festen Schaufeln (18), so daß deren Wirkung verstärkt wird.

6. Anordnung nach einem der vorhergehenden Ansprüche 1 bis 5, dadurch gekennzeichnet, daß die festen Schaufeln (18) fest miteinander verbunden sind, um eine monolithe Einheit (19) zu bilden.

7. Anordnung nach den Ansprüchen 2 und 7, dadurch gekennzeichnet, daß die monolithe Einheit (19) so ausgebildet ist, daß sie zum einfachen Einfügen auf der Seite des Ausgangs (6) des Tunnels (4) geeignet ist.

8. Anordnung nach einem der Ansprüche 2 bis 7, dadurch gekennzeichnet, daß die monolithe Einheit (19) einen äußeren (20) und einen inneren (22) konzentrischen Kranz aufweist, zwischen denen die festen Schaufeln (18) radial angeordnet liegen, wobei der Außendurchmesser des äußeren Kranzes (20) dem Innedurchmesser des Tunnelteils (6), in dem die Einheit eingesetzt ist, und der Innendurchmesser des Innenkranzes (22) dem

Außendurchmesser des von dem Innenkranz (22) eingeschlossenen Nabenteiles (12) entspricht.

9. Anordnung nach Anspruch 8, dadurch gekennzeichnet, daß der äußere (20) und der innere (22) Kranz Ausnehmungen (23, 24) zum Durchführen der radialen Stützarme (13a, 13b und 13c) aufweisen.

**Claims**

1. Tail rotor arrangement for rotary wind aircraft, comprising a tunnel (4) of axis (X—X) transverse with respect to said aircraft and in which is disposed a multi-blade (11) rotor (10) coaxial with respect to said tunnel (4) and generating a transverse air flow, together with a plurality of blades arranged at least substantially radially with respect to said tunnel, characterized in that said blades (18) are fixed and disposed downstream of said rotor (10) with respect to said air flow to be able to recover in the form of axial thrust the energy of rotation of the air flow at the outlet of the rotor (10), and in that the distance d separating the trailing edge of the rotating blades (11) from the leading edge of the fixed blades (18) is at least equal to once the length of the chord of the profile of said rotating blades (11).

2. Arrangement according to claim, 1, in which said rotor rotates with respect to a fixed hub (12) coaxial to the tunnel (4), characterized in that said fixed blades (18) are disposed between said hub (12) and said tunnel (4) so as to participate at least partially in the mechanical connection between said hub and said tunnel.

3. Arrangement according to claim 2, in which said fixed hub (12) is connected to the structure of the aircraft by radial support arms (13a, 13b and 13c), characterized that said fixed blades (18) are disposed in the spaces between said radial support arms (13a, 13b and 13c).

4. Arrangement according to claim 2, in which said fixed hub (12) is connected to the structure of the aircraft by radial support arms (13a, 13b and 13c), characterized in that said fixed blades (18) are disposed upstream of said support arms.

5. Arrangement according to claim 3, characterized in that the radial support arms (13a, 13b and 13c) present the same profile as the fixed blades (18) in order to reinforce the action thereof.

6. Arrangement according to any one of claims 1 to 5, characterized in that said fixed blades (18) are fast with one another to form a monolithic assembly (19).

7. Arrangement according to claim 6, characterized in that said monolithic assembly (19) is provided to fit by simple interlocking at the outlet (6) of the tunnel (4).

8. Arrangement according to claims 2 and 7, characterized in that said monolithic assembly (19) comprises an outer ring (20) and an inner ring (22) concentric to each other and between which said fixed blades (18) are radially disposed, the outer diameter of the outer ring (20) corresponding to the inner diameter of the part (6) of tunnel (4) in which said assembly is disposed and the inner diameter of the inner ring (22) corresponding to the outer diameter of the part of hub (12) gripped by said inner ring (22).

9. Arrangement according to claim 8, characterized in that the outer (20) and inner (22) rings comprise recesses (23, 24) for the passage of said radial support arms (13a, 13b and 13c).

Fig.1

Fig.2

Fig.3

0 107 543

Fig.4

Fig.5

*Fig. 6*